# EUROPÄISCHE PATENTSCHRIFT

(11) **EP 1 260 043 B1**
(45) Veröffentlichungstag und Bekanntmachung des Hinweises auf die Patenterteilung: **26.10.2005**
(21) Anmeldenummer: 01915045.7
(22) Anmeldetag: 28.02.2001
(51) Int. Cl.: H04J 14/02

(54) **ANORDNUNG ZUR ERZEUGUNG EINES WELLENLÄNGEN-MULTIPLEXSIGNALS MIT GERINGEN KANALABSTÄNDEN**
ARRANGEMENT FOR PRODUCING A WAVELENGTH-MULTIPLEX SIGNAL WITH SMALL INTERCHANNEL SPACES
DISPOSITIF DE GENERATION D'UN SIGNAL MULTIPLEXE EN LONGUEURS D'ONDES AYANT DE FAIBLES ESPACEMENTS ENTRE CANAUX

(30) Priorität: 03.03.2000 DE 10010453
(43) Veröffentlichungstag der Anmeldung: 27.11.2002
(73) Patentinhaber: SIEMENS AKTIENGESELLSCHAFT, 80333 München (DE)
(72) Erfinder: BOCK, Harald, 86150 Augsburg (DE)
(86) Internationale Anmeldenummer: PCT/DE2001/000741
(87) Internationale Veröffentlichungsnummer: WO 2001/065752

(56) Entgegenhaltungen:
- EP-A- 1 109 342
- WO-A-01/05082
- US-A- 5 748 350

## Beschreibung

Die Erfindung betrifft eine Anordnung zur Erzeugung von Wellenlängen-Multiplexsignalen.

Die Übertragung von Daten mit hohen Datenraten erfolgt in optischen Systemen mit Hilfe des Wellenlängen-Multiplexverfahrens. Als Kanaldatenraten werden jetzt 40 Gbit/s angestrebt; in Zukunft wird es auch höhere Datenraten geben. Mehrere optische Einzelsignale werden sendeseitig über optische Filter zu einem Wellenlängen-Multiplexsignal zusammengefaßt, in Datenimpulse umgesetzt, übertragen und dann empfangsseitig wieder in Einzelsignale aufgeteilt.'Bei einem üblichen Kanalabstand von 100 GHz und Übertragungsraten von 40 Gbit/s treten insbesondere beim RZ-Format (return to zero) der Datenimpulse sowohl im sendeseitigen Multiplexer als auch im empfangsseitigen Demultiplexer aufgrund der Beschränkung des Spektrums durch die begrenzten Filterbandbreiten bereits Qualitätsverschlechterungen der Signale auf.

Aus DE 4209790 A1 ist eine mehrstufige Vermittlungseinrichtung für optische Signale bekannt, die mehrere optische Signale mittels Frequenzlagerumsetzer koppelt. Dabei wird den Eingängen der Frequenzlagenumsetzer jeweils ein Signal mit einer bestimmten Betriebswellenlänge zugeführt. Jeder Frequenzlagenumsetzer ist in der Lage, das ihm zugeführte Signal je nach Ansteuerung in eine von mehreren vorgegeben Betriebswellenlängen umzusetzen. Als Frequenzlagenumsetzer kommt eine Kombination aus einem optoelektronischem Umsetzer und abstimmbarem Laser oder ein Y-Laser in Frage. Dadurch können Wellenlängen eines Signals auf andere Wellenlängen umgesetzt werden. Eine Zusammenfassung mehrerer unterschiedliche Wellenlängen aufweisenden Signale bei gleichzeitiger Reduzierung der Kanalabständen mit minimierter Beeinträchtigung der Signalqualität ist hier jedoch nicht erwähnt.

Aus US 5 748 350 ist eine Anordnung zur Erzeugung eines Wellenlängen-Multiplexsignals mit geringem Kanalabstand bekannt, bei der ein Zirkulator Signale mit großen Wellenlängenabständen aus wenigstens zwei Wellenlängen-Multiplexern in ein Wellenlängen-Multiplex-Signal mit geringen Wellenlängenabständen zusammenfasst. Bei der Anordnung mit zwei Wellenlängen-Multiplexern weist eine der Verbindungen zwischen einem ersten Wellenlängen-Multiplexer und dem Zirkulator eine Reihe von Bragg-Filtern auf, mit denen Reflexionen der aus dem zweiten Wellenlängen-Multiplexer abgegebenen Signale gefiltert werden können.

Aufgabe der Erfindung ist es daher, eine Anordnung zur Erzeugung eines Wellenlängen-Multiplexsignals mit geringem Kanalabstand anzugeben, die nur geringe Qualitätseinbußen bewirkt. Die Anordnung soll so ausgebildet werden, dass sie nur eine relativ geringe Dämpfung aufweist.

Diese Aufgabe wird durch eine Anordnung gemäss Anspruch 1 gelöst.

Eine vorteilhafte Weiterbildung der Erfindung ist in Anspruch 2 angegeben.

Die Anordnung ist mit einem relativ geringem Aufwand kostengünstig zu realisieren, benötigt nur einen geringen Platzauf wand und erzeugt ein Multiplexsignal, dessen Einzelsignale praktisch keine durch eine Bandbegrenzung verursachte Verschlechterung aufweisen. Diese Anordnung kann nur sendeseitig eingesetzt werden.

Ein Ausführungsbeispiel der Erfindung wird anhand einer Figur näher erläutert.

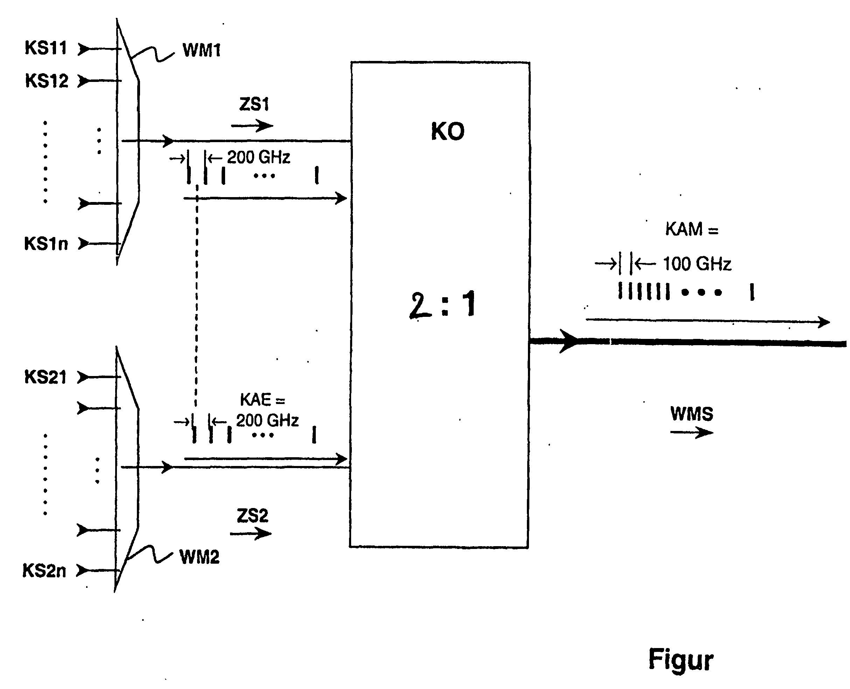

Das in der Figur dargestellte Ausführungsbeispiel der Erfindung enthält zwei Wellenlängenmultiplexer WM1 und WM2, deren Ausgänge mit den Eingängen eines optischen Kopplers KO verbunden sind.

Die Wellenlängenmultiplexer WM1 und WM2 sind als Filteranordnungen realisiert, die Kanalabstände festlegen, wobei die Durchlaßbereiche den Kanalbandbreiten entsprechen. Den Eingängen der Wellenlängenmultiplexer WM1 und WM2 wird jeweils eine Gruppe modulierter optischer Signale (Einzelsignale) KS11 bis KS1n bzw. KS21 bis KS2n - beispielsweise im RZ-Format - zugeführt, deren Frequenz- oder Kanalabstand von 200 GHz das Doppelte des Kanalabstandes von 100 GHz des Wellenlängen-Multiplexsignals WMS am Ausgang der Anordnung beträgt. Die Signale KS11 bis KS1n werden durch den ersten Wellenlängenmultiplexer WM1 zu einem ersten Zwischensignal ZS1 (Wellenlängen-Multiplexsignal mit doppeltem Kanalabstand) zusammengefaßt, und die Signale KS21 bis KS2n werden durch den zweiten Wellenlängenmultiplexer WM2 zu einem zweiten Zwischensignal ZS2 zusammengefaßt.

Beide Zwischensignale ZS1 und ZS2 werden im Koppler KO zu dem gewünschten Wellenlängen-Multiplexsignal WMS zusammengefaßt, wobei die Signale KS11 bis KS1n und KS21 bis KS2n beider Zwischensignale miteinander verschachtelt werden. Voraussetzung hierfür ist, daß die Trägerfrequenzen (Mittelfrequenzen) der optischen Signale KS11 bis KS1n gegenüber den Signalen KS21 bis KS2n um den Kanalabstand KAM des Wellenlängen-Multiplexsignals WMS gegeneinander versetzt sind und natürlich auch die Kanäle der Wellenlängenmultiplexer entsprechend ausgebildet sind.

Die Wellenlängenmultiplexer WM1 und WM2 entsprechen Filteranordnungen, die entsprechend dem Spektrum der modulierten optischen Signale KS11 bis KS1n und KS21 bis KS2n, also abhängig von der Datenrate und der Modulation (bei RZ-Impulsen von der Impulsdauer), dimensioniert sind. Die Bandbreite jedes Kanals des Wellenlängenmultiplexer wird stets so gewählt, daß sie größer ist als die Bandbreite des zugehörigen empfangsseitigen Demultiplexers. Sie wird so groß gewählt, daß möglichst keine Beschränkung des Spektrums erfolgt bzw. deren Einfluß auf die Signalqualität vernachlässigbar ist. Bei einer den Wellenlängenmultiplexer bildenden Filteranordnung nach dem Ausführungsbeispiel wird daher von 200 GHz-Filtern gesprochen (dies entspricht dem Kanalabstand KAE der Zwischensignale), da sie die doppelten Bandbreiten aufweisen wie ein Multiplexer, der bei einer einstufigen Erzeugung des Wellenlängen-Multiplexsignals benötigt wird. Bei einem Tastverhältnis von 0,3 der optischen Signale ist eine Dimensionierung der Filter günstig, die bei ca. ±60 GHz Abweichung (entspricht einem Drittel des Kanalabstandes des Multiplexers) von der Mittelfrequenz eine Zusatzdäpfung von 1 dB aufweist. Der optische Koppler KO hat keine bandbegrenzenden Eigenschaften.

Es können auch mehr als zwei Wellenlängenmultiplexer und ein Koppler mit der entsprechenden größeren Anzahl von Eingängen zur Bildung des Wellenlängenmultiplexsignals verwendet werden. Die Trägerfrequenzen der Einzelsignale bzw. die Mittenfrequenzen der Kanäle sind dann um den entsprechenden Frequenzabstand des Wellenlängen-Multiplexsignals gegeneinander versetzt. Da die Dämpfung des Kopplers mit der Anzahl der Eingänge jedoch zunimmt, ist stets ein günstiger Kompromiss bei der Ausbildung der Anordnung zu schliessen, die den Kanalabstand, die Kanalbandbreite der Wellenlängenmultiplexer, die Anzahl der Wellenlängenmultiplexer und die Dämpfung des optischen Kopplers berücksichtigt. Bei entsprechend versetzten Kanalrastern können auch zwei oder mehrere der in der Figur gezeigten Anordnungen über einen weiteren Koppler kaskadiert werden.

Zu ergänzen ist noch, dass zwischen den Wellenlängenmultiplexern und den Kopplereingängen verstärkende, dämpfende oder frequenzabhängige Elemente eingeschalten werden können.

## Patentansprüche

1. Anordnung zur Erzeugung eines Wellenlängen-Multiplexsignals (WMS) mit geringen Kanalabständen mit einer Mehrzahl von m, m=2, 3, ..., Wellenlängen-Multiplexern (WM1, WM2, ..., WMm), denen jeweils in einer Gruppe optische Signale (KS11 bis KS1n; KS21 bis KS2n; ...; KSm1 bis KSmn) zugeführt sind, deren Kanalabstände (KAE) jeweils dem m-fachen Kanalabstand (KAM) des Wellenlängen-Multiplexsignals (WMS) entsprechen und deren Durchlassbereiche jeweils um den Kanalabstand (KAM) des Wellenlängen-Multiplexsignals (WMS) gegeneinander versetzt sind, mit jeweils einem Multiplexer (WM1, WM2, ..., WMm) zugehörigen empfangsseitigen Demultiplexern und mit einem optischen Koppler (KO), dessen Eingänge Ausgängen der Wellenlängen-Multiplexer (WM1, WM2, ..., WMm) zur Erzeugung des Wellenlängen-Multiplexsignals (WMS) verbunden sind, wobei die Durchlassbereiche der Wellenlängen-Multiplexer (WM1, WM2, ..., WMm) derart breitbandig ausgeführt sind, dass eine Beschränkung des Spektrums der ihnen jeweils in einer Gruppe zugeführten optischen Signale (KS11 bis KS1n; KS21 bis KS2n; ...; KSm1 bis KSmn) die Signalqualität nur vernachlässigbar beeinträchtigt, und
**dadurch gekennzeichnet,**
**dass** die Durchlassbereiche der Wellenlängen-Multiplexer (WM1, WM2, ..., WMm) eine größere Bandbreite als die des jeweils zugehörigen empfangsseitigen Demultiplexers aufweisen.

2. Anordnung nach Anspruch 1,
**dadurch gekennzeichnet,**
**dass** sie zwei Wellenlängen-Multiplexer (WM1, WM2) und einen optischen Koppler (KO) mit 2 Eingängen aufweist.

3. Anordnung nach Anspruch 1 oder 2,
**dadurch gekennzeichnet,**
**dass** die Zusatzdämpfung eines Wellenlängen-Multiplexers (WM1, WM2) bei einer Ablage von der Mittenfrequenz eines Übertragungskanals, die 1/3 des Abstandes seiner Durchlassbereiche entspricht, annähernd 1 dB entspricht.

4. Anordnung nach einem der vorhergehenden Ansprüche,
**dadurch gekennzeichnet,**
**dass** die Kanäle der Wellenlängen-Multiplexer (WM1, WM2) spektral maximale Durchlassbereiche aufweisen.

## Claims

1. Arrangement for generating a wavelength multiplex signal (WMS) having narrow channel spacings with a plurality of m, m=2, 3, ..., wavelength multiplexers (WM1, WM2, ..., WMm), to which optical signals (KS11 to KS1n; KS21 to KS2n; ...; KSm1 to KSmn) are supplied in a group in each case, the channel spacings (KAE) of which correspond in each case to m times the channel spacing (KAM) of the wavelength multiplex signal (WMS), and the passbands of which are mutually offset by the channel spacing (KAM) of the wavelength multiplex signal (WMS) in each case, having demultiplexers at the receiving end associated with a multiplexer (WM1, WM2, ..., WMm) in each case, and having an optical coupler (KO), the inputs of which are connected to outputs of the wavelength multiplexers (WM1, WM2, ..., WMm) to generate the wavelength multiplex signal (WMS), wherein the passbands of the wavelength multiplexers (WM1, WM2, ..., WMm) are designed to be broadband such that a limitation of the spectrum of the optical signals (KS11 to KS1n; KS21 to KS2n; ...; KSm1 to KSmn) supplied to them in a group in each case causes at most a negligible impairment of the signal quality, and **characterized in that** the passbands of the wavelength multiplexers (WM1, WM2, ..., WMm) have a greater bandwidth than those of the associated demultiplexer at the receiving end in each case.

2. Arrangement according to Claim 1, **characterized in that** two wavelength multiplexers (WM1, WM2) and one optical coupler (KO) having 2 inputs are provided.

3. Arrangement according to Claim 1 or 2, **characterized in that**, given a deviation from the medium frequency of a transmission channel that corresponds to one third of the spacing of its passbands, the additional attenuation of a wavelength multiplexer (WM1, WM2) corresponds to approximately 1 dB.

4. Arrangement according to one of the preceding claims, **characterized in that** spectrally, the channels of the wavelength multiplexers (WM1, WM2) have maximum passbands.

## Revendications

1. Dispositif de génération d'un signal multiplex en longueur d'ondes (WMS) ayant de faibles écarts entre canaux, comprenant une pluralité de m, m=2, 3, ..., multiplexeurs en longueur d'ondes (WM1, WM2, ..., WMm), auxquels sont respectivement amenés en groupes des signaux optiques (KS11 à KS1n ; KS21 à KS2n ; ..., KSm1 à KSmn), dont les écarts entre canaux (KAE) correspondent respectivement à m fois l'écart entre canaux (KAM) du signal multiplex en longueur d'ondes (WMS) et dont les bandes passantes sont respectivement décalées les unes contre les autres de l'écart entre canaux (KAM) du signal multiplex en longueur d'ondes (WMS), comprenant des démultiplexeurs côté réception appartenant respectivement à un multiplexeur (WM1, WM2, ..., WMm) et comprenant un coupleur optique (KO) dont les entrées sont raccordées aux sorties des multiplexeurs en longueur d'ondes (WM1, WM2, ..., WMm) pour générer le signal multiplex en longueur d'ondes (WMS), les bandes passantes des multiplexeurs en longueur d'ondes (WM1, WM2, ..., WMm) étant exécutées à large bande, de telle manière qu'une limitation du spectre des signaux optiques (KS11 à KS1n ; KS21 à KS2n ; ..., KSm1 à KSmn) qui leur sont respectivement amenés en groupes n'altère la qualité de signal que de manière négligeable
et
**caractérisé en ce**
**que** les bandes passantes des multiplexeurs en longueur d'ondes (WM1, WM2, ..., WMm) présentent une plus grande largeur de bande que celle du démultiplexeur respectivement correspondant côté réception.

2. Dispositif selon la revendication 1,
**caractérisé en ce**
**qu'**il présente deux multiplexeurs en longueur d'ondes (WM1, WM2) et un coupleur optique (KO) ayant deux entrées.

3. Dispositif selon la revendication 1 ou 2,
**caractérisé en ce**
**que** l'atténuation supplémentaire d'un multiplexeur en longueur d'ondes (WM1, WM2) correspond à approximativement 1 dB, en cas d'une déviation de la fréquence moyenne d'un canal de transmission qui correspond à 1/3 de l'écart de ses bandes passantes.

4. Dispositif selon l'une quelconque des revendications précédentes,
**caractérisé en ce**
**que** les canaux des multiplexeurs en longueur d'ondes (WM1, WM2) présentent des bandes passantes maximales spectralement.
